# EUROPEAN PATENT SPECIFICATION

(11) **EP 2 289 338 B1**
(45) Date of publication and mention of the grant of the patent: **23.04.2014**
(21) Application number: 10382218.5
(22) Date of filing: 05.08.2010
(51) Int. Cl.: A21C 9/00

(54) **Hopper for bread dough machines**
Zuführtrichter für Brotteigmaschinen
Trémie pour machines de pâte à pain

(30) Priority: 21.08.2009 ES 200930390 U
(43) Date of publication of application: 02.03.2011
(73) Proprietor: Garcia-Lajara, Gregorio, 45880 Corral de Almaguer (ES); Steel-Inox, S.L., 46470 Albal (ES)
(72) Inventor: Garcia-Lajara, Gregorio, 45880 Corral de Almaguer (ES); Baguena Canet, Jose, 46196 Catadu (ES); Mico Montesinos, Manuel, 46111 Rocafort (ES)
(74) Representative: Carvajal y Urquijo, Isabel

(56) References cited:
- ES-U- 1 068 689
- GB-A- 488 844
- US-A- 4 277 183

## Description

### Field of the invention

The present invention refers to a hopper for bread dough machines, intended for the manipulation of bread dough, particularly bread dough dividing and weighing machines.

The hopper of the invention is constituted so that it provides the machine the necessary means to maintain the bread dough at an appropriate temperature, along the entire manipulation process carried out by the machine.

### Background of the invention

In both the making of bread and the making of bakery products it is desirable to maintain the dough which is manipulated at a particular temperature, which can be between 22 and 25º C. At certain times or circumstances, the dough acquires an excessively high temperature, which can be originated by the room temperature or by the machine itself, while at other times or circumstances, generally due to the room temperature, the temperature of the bread dough can decrease below the aforementioned limits.

In order to solve this problem, it is known, thanks to the utility model ES 1068689U, to employ a fluid conditioning system intended for the aforementioned purpose, which includes conditioning equipment and a coil or similar which surrounds the machine hopper, in contact with the wall thereof, and through which the heating or refrigerating fluid of the air conditioning equipment circulates. The fluid conditioning equipment can H also be used for the heating or cooling of the lubricating oil of the machine.

The aforementioned equipment has the inconvenience of its installation and mounting, which makes it applicable almost exclusively to new machines. Besides, the different components of the fluid conditioning equipment are located outside the machine, on different points thereof, with the inconveniences this can entail.

Document GB 488 844 discloses improvements in dough handling machines and particularly to dough dividing and rounding-up machines. Specifically, GB 488 844 discloses a dough handling machine which has a stationary feed hopper having a discharge end which contacts with a rotatory table with measuring pockets, which have means to eject measured lumps of dough from the pockets to means for rounding-up the lump of dough. The hopper features a water jacket for a circulating cooling medium.

The object of the present invention is to eliminate the aforementioned problems.

This is achieved through a bread dough feeding hopper as defined in claim 1, which replaces the traditional hopper of the machine and is constituted in such a way that it enables to maintain the temperature of the bread dough within a desired range.

The outer wall of the hopper has a coating of thermally insulating material, so that the temperature of the chamber delimited between the inner and outer walls of the hopper is transmitted almost completely to the inner wall, so as to enable to maintain the bread dough at a desired temperature.

In the chamber defined between the inner and outer walls of the hopper there can also be installed a duct, such as a coil and constituted of a material which is a good heat conductor, which is connected to the external lubricating circuit of the different components of the bread dough machine. When the lubricating oil circulates through the duct or coil installed in the chamber delimited by the inner and outer walls of the hopper, it acquires the temperature of said chamber and which will be transmitted to the different machine parts lubricated by the oil, thus guaranteeing the temperature of the bread dough along its entire path through said machine.

The heating fluid coming from the fluid conditioning equipment can be air, water, oil, etc., H and as it has been indicated, the heating equipment can be fixed to the outer wall of the hopper, being part of it.

The hopper and the air conditioning apparatus constitute a compact assembly which can be installed in traditional bread dough machines, only replacing the hopper of said machine by the hopper of the invention, for which purpose the anchorages of the traditional hopper to be replaced can be used.

The hopper will have a safety cover, to which there can be incorporated a microswitch, limit switch or similar, which, when the cover is opened, automatically stops the bread dough machine, in order to protect the user from moving elements of the machine, to safeguard their safety.

Through the hopper chamber, defined between its inner and outer walls, there will circulate the refrigerating fluid, cold or hot, depending on the circumstances, which will maintain the inner wall of the hopper at an appropriate temperature so that the dough stays within the range desired by the user.

### Brief description of the drawings

The attached drawings represent a hopper for bread dough machines, constituted according to the invention, presented as a non-limiting example thereof.

In the drawings:
Figure 1 shows a perspective view of the bread dough dividing and weighing machine, in which the hopper of the invention is installed.
Figure 2 shows a perspective view of the hopper of the invention, separated from the machine shown in figure 1.
Figure 3 shows a vertical sectional view of the hopper of the invention, taken according to the cutting line III-III of figure 2.

### Detailed description of an embodiment

The following is a detailed description of the hopper of the invention shown in the aforementioned figures.

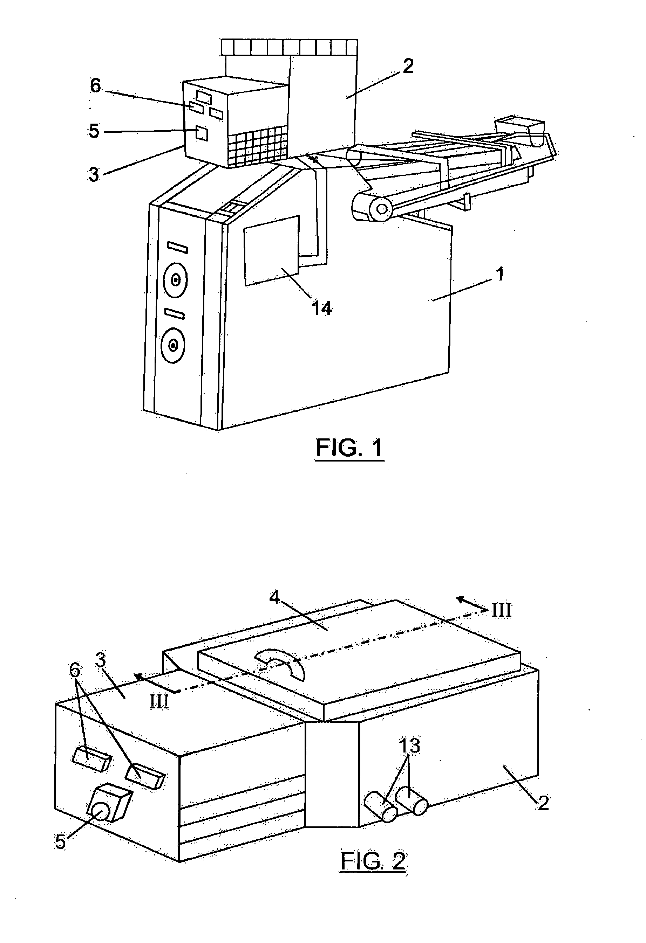

Figure 1 shows a bread dough dividing and weighing machine 1, of traditional constitution, in which there is installed a hopper 2, constituted according to the invention, in which there is exteriorly coupled an air conditioning equipment 3, which supplies a heating fluid, hot or cold, to maintain the bread dough which is manipulated at the desired temperature.

As it can be seen better in figure 2, the hopper 2 has a cover 4 which can be linked to a microswitch or similar through which the stop of the machine is automatically produced when said cover is opened. The casing 2 has the air conditioning equipment 3 externally coupled thereto, which can be equipped with the corresponding switch 5 and thermostat 6.

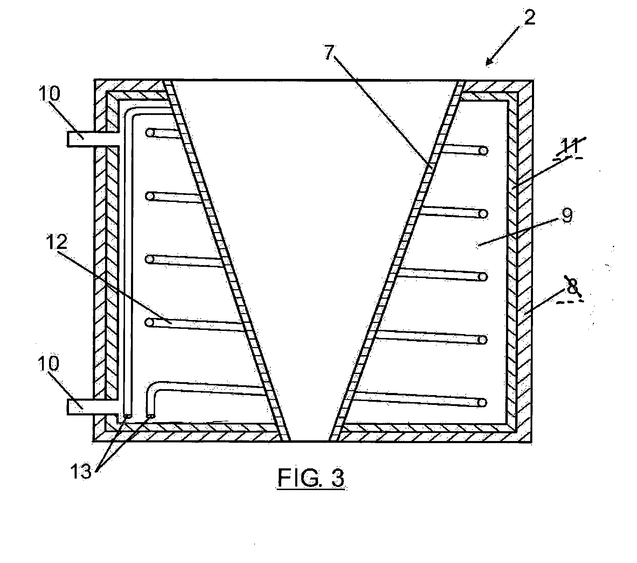

As it can be seen in figure 3, the hopper 2 comprises an inner wall 7 and an outer wall 8, delimiting a watertight chamber 9 between them. Through this chamber 9 a heating fluid circulates coming from the air conditioning equipment 3, which can consist of air, water or oil. To that end the chamber 9 has connecting mouths 10 to the air conditioning equipment 3.

The outer wall 8 will have a coating 11 made of thermally insulating material, so that the temperature of the heating fluid circulating through the chamber 9 is transmitted almost completely to the inner wall 7 of the hopper 2, to which the bread dough will be in contact.

In the chamber 9 of the hopper 2 there can also be installed a coil 12 or similar, which is connected to the external lubricating circuit 14, figure 1, of the machine 1 through inlet and outlet ducts 13. In this way the oil used for lubricating the different parts of the machine will transmit thereto the temperature of the chamber 9, to maintain the bread dough at the desired temperature in its circulation or displacement along the entire machine, from the inlet hopper 2.

With the constitution shown in figure 2, there is an equipment or compact assembly including the hopper 2 and the air conditioning equipment 3 and which can be installed in already existing machines to manipulate bread dough, just by replacing the traditional hopper by the hopper of the invention and connecting the air conditioning equipment to a power supply.

The insulating coating 11 will be preferably placed on the inside of the outer wall 8, in order to prevent it from deteriorating due to friction or accidental hits.

The coil 12 will be metallic, in order to attain a good transmission of the temperature of the thermal fluid circulating through the chamber 9 and the refrigerating oil circulating inside said coil 12.

## Claims

1. Hopper (2) or bread dough machines, having an inner wall (7), which delimits the space in which the bread dough to be manipulated is deposited, and an outer wall (8), between the inner (7) and outer (8) walls of which there is delimited a watertight chamber (9), adapted to be circulated through by a heating fluid, and the outer wall (8) of which is provided with a coating (11) made of thermally insulating material, said hopper (2) comprising a fluid conditioning equipment (3) which is externally coupled or fixed to the outer wall (8) of the hopper (2).

2. Hopper according to claim 1, **characterized in that** through the chamber (9) there runs a duct made of a good heat conductive material, which connects to the external lubricating circuit of the different parts of the bread dough machine (1), for transmitting the temperature of the chamber (9) to the oil of said circuit.

## Patentansprüche

1. Trichter (2) für Brotteigmaschinen, mit einer Innenwand (7), welche den Raum begrenzt, in welchem der zu verarbeitende Brotteig eingelegt ist, und einer Außenwand (8), wobei zwischen der Innenwand (7) und der Außenwand (8) eine wasserdichte Kammer (9) begrenzt ist, eingestellt um von einem Heizfluid durchströmt zu werden, und wobei die Außenwand (8) mit einer Beschichtung (11) aus einem wärmeisolierenden Material versehen ist, wobei der genannte Trichter (2) eine Fluidaufbereitungseinrichtung (3) umfasst, welche außen an der Außenwand (8) des Trichters (2) gekoppelt oder befestigt ist.

2. Trichter nach Anspruch 1, **dadurch gekennzeichnet, dass** durch die Kammer (9) eine Leitung aus einem Material mit guter Wärmeleitfähigkeit verläuft, welche mit dem äußeren Schmierkreislauf der verschiedenen Teile der Brotteigmaschine (1) zur Übertragung der Temperatur der Kammer (9) auf das Öl des genannten Kreislaufs verbunden ist.

## Revendications

1. Trémie (2) pour machines de pâte à pain, présentant une paroi interne(7), qui délimite l'espace dans lequel la la pâte à pain à manipuler est déposée, et une paroi externe (8), entre les parois interne (7) et externe (8) de laquelle est délimitée une chambre étanche (9), adaptée pour qu'un fluide chauffant circule à travers de celle-ci, et la paroi extérieure (8) est pourvue d'un revêtement (11) en matériau d'isolation thermique, ladite trémie (2) comprenant un équipement de conditionnement de fluide (3) qui est couplé à l'extérieur ou fixé à la paroi externe (8) de la trémie (2).

2. Trémie selon la revendication 1, **caractérisée en ce que** à travers de la chambre (9) passe un conduit fabriqué d'un matériau bon conducteur de la chaleur, qui se connecte au circuit lubrifiant externe des différentes parties de la machine de pâte à pain (1), pour transmettre la température de la chambre (9) de l'huile dudit circuit.
